# EUROPEAN PATENT APPLICATION

(11) **EP 4 819 704 A1**
(43) Date of publication of application: **07.10.2026**
(21) Application number: 24905944.5
(22) Date of filing: 14.11.2024
(51) Int. Cl.: H04W 56/00

(54) **COMMUNICATION METHOD AND COMMUNICATION DEVICE**

(30) Priority: 19.12.2023 CN 202311762582
(71) Applicant: Huawei Technologies Co., Ltd., Shenzhen, Guangdong 518129 (CN)
(72) Inventor: LU, Rui, Shenzhen, Guangdong 518129 (CN); HU, Xingxing, Shenzhen, Guangdong 518129 (CN); ZHONG, Yaping, Shenzhen, Guangdong 518129 (CN)
(74) Representative: Huawei European IPR
(86) International application number: PCT/CN2024/132044
(87) International publication number: WO 2025/130458

(57) **Abstract**

This application relates to the communication field, and specifically, to a communication method and a communication apparatus. In a multi-connectivity scenario, a terminal may use a plurality of communication connections for communication. The plurality of communication connections may belong to different cells. The different cells may correspond to different TAs. In a terrestrial network, a TA is determined by a base station. Therefore, the base station can determine TAs of different cells in a multi-connectivity scenario. However, in an NTN, a TA is determined by a terminal. After receiving the TA, a base station cannot determine a cell corresponding to the TA in a multi-connectivity scenario. In embodiments of this application, when a terminal sends a first TA of a first communication unit, a first identifier is carried. After receiving first information, a base station parses the first information to obtain the first TA and the first identifier, and may determine, based on the first identifier, the first communication unit corresponding to the first TA, so that correspondences between TAs and communication units in a multi-connectivity scenario in an NTN can be distinguished.

## Description

This application claims priority to Chinese Patent Application No. 202311762582.2, filed with the China National Intellectual Property Administration on December 19, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

To ensure time synchronization at a receive end, a timing advance (timing advance, TA) mechanism is introduced into a wireless communication system. A base station may adjust TAs of terminals, so that moments at which uplink signals of the terminals arrive at the base station are basically aligned.

In a multi-connectivity scenario, a terminal may use a plurality of communication connections for communication. The plurality of communication connections may belong to different cells. The different cells may correspond to different TAs. In a terrestrial network, a TA is determined by a base station. Therefore, the base station can determine TAs of different cells in a multi-connectivity scenario. However, in a non-terrestrial network (non-terrestrial network, NTN), a TA is determined by a terminal. In a multi-connectivity scenario, the terminal communicates with a plurality of cells, and different cells may correspond to different TAs. How a terminal reports a TA in a multi-connectivity scenario is a problem to be resolved.

### SUMMARY

Embodiments of this application provide a communication method, a communication apparatus, a computer-readable storage medium, and a computer program product, so that a base station can determine correspondences between TAs and cells in a multi-connectivity scenario in an NTN.

According to a first aspect, an embodiment of this application provides a communication method. The method may be performed by a terminal or a chip used in the terminal. The following uses an example in which the method is performed by the terminal for description. The method includes: determining first information, where the first information includes a first TA and a first identifier, and the first identifier indicates an association relationship between a first communication unit and the first TA; and sending the first information.

The first communication unit is, for example, a first cell, and the first identifier may be any information indicating an association relationship between the first cell and the first TA. When sending the first TA, the terminal sends the first TA and the first identifier together. After receiving the first information, a base station parses the first information to obtain the first TA and the first identifier, and may determine, based on the first identifier, the first cell corresponding to the first TA, so that correspondences between TAs and cells in a multi-connectivity scenario in an NTN can be distinguished.

Optionally, sending the first information includes: if a first condition is satisfied, sending the first information. The first condition includes: Second information is received. The second information indicates to activate the first communication unit, or the second information indicates to hand over to the first communication unit.

In this embodiment, the second information is used as a condition for triggering reporting of the TA, so that the terminal can report the TA as soon as possible when the cell is activated or the cell is handed over to. In comparison with indicating the terminal through other information to report the TA, in this embodiment, a TA reporting delay can be reduced.

Optionally, the second information indicates to activate the first communication unit, and the second information includes secondary cell activation information, enhanced secondary cell activation information, or secondary cell state information.

Optionally, the method further includes: receiving third information. The third information includes a TA offset and the first identifier.

The base station may adjust, by using the TA offset, the TA reported by the terminal. Because the terminal may use a plurality of TAs in a multi-connectivity scenario, the third information includes the first identifier, so that the terminal can determine that a TA adjusted by using the TA offset is the first TA, to avoid a TA adjustment error.

Optionally, the method further includes: if a second condition is satisfied, determining not to send the first information. The second condition includes one or more of the following conditions: Fourth information is received, where the fourth information indicates to deactivate the first communication unit, or the fourth information indicates to hand over to a second communication unit; or a deactivation timer of the first communication unit expires.

If one or more cases in the second condition occur, reporting the first TA is meaningless. The terminal may cancel reporting of the first TA when the second condition is satisfied, to save resources.

Optionally, before determining the first information, the method further includes: receiving a second identifier. The second identifier has an association relationship with the first communication unit. The second identifier is longer than the first identifier.

The second identifier pre-configured by the base station is usually unique. For example, one cell can be uniquely determined through the second identifier. However, a disadvantage of this identifier is that it is long, that is, occupies a large quantity of bits. In this embodiment, the first identifier is a short identifier. The terminal indicates an association relationship between the first cell and the first TA through one short identifier, so that resources for TA reporting can be reduced.

Optionally, the first identifier is an identifier of a first TA group. A communication unit corresponding to the first TA group includes the first communication unit.

Optionally, the first identifier is an index of the first communication unit. The second identifier is an identifier of the first communication unit.

Optionally, the first identifier is an index of a first aircraft. The second identifier is an identifier of the first aircraft. The first communication unit is a communication unit of the first aircraft.

Optionally, the first identifier is an index of a first logical channel, and the second identifier is an identifier of the first logical channel. The first logical channel has an association relationship with the first communication unit; and/or the first logical channel has an association relationship with a first aircraft, and the first communication unit is a communication unit of the first aircraft.

According to a second aspect, an embodiment of this application provides a communication method. The method may be performed by a base station or a chip used in the base station. The following uses an example in which the method is performed by the base station for description. The method includes: receiving first information, where the first information includes a first TA and a first identifier, and the first identifier indicates an association relationship between a first communication unit and the first TA; and determining the association relationship between the first communication unit and the first TA based on the first identifier.

The first communication unit is, for example, a first cell, and the first identifier may be any information indicating an association relationship between the first cell and the first TA. When sending the first TA, the terminal sends the first TA and the first identifier together. After receiving the first information, the base station parses the first information to obtain the first TA and the first identifier, and may determine, based on the first identifier, the first cell corresponding to the first TA, so that correspondences between TAs and cells in a multi-connectivity scenario in an NTN can be distinguished.

Optionally, before receiving the first information, the method further includes: sending second information. The second information indicates to activate the first communication unit, or the second information indicates to hand over to the first communication unit.

Optionally, the second information indicates to activate the first communication unit, and the second information includes secondary cell activation information, enhanced secondary cell activation information, or secondary cell state information.

In this embodiment, the second information is used as a condition for triggering reporting of the TA, so that the terminal can report the TA as soon as possible when the cell is activated or the cell is handed over to. In comparison with indicating the terminal through other information to report the TA, in this embodiment, a TA reporting delay can be reduced.

Optionally, the method further includes: sending third information. The third information includes a TA offset and the first identifier.

The base station may adjust, by using the TA offset, the TA reported by the terminal. Because the terminal may use a plurality of TAs in a multi-connectivity scenario, the third information includes the first identifier, so that the terminal can determine that a TA adjusted by using the TA offset is the first TA, to avoid a TA adjustment error.

Optionally, before receiving the first information, the method further includes: sending a second identifier. The second identifier has an association relationship with the first communication unit. The second identifier is longer than the first identifier.

The second identifier pre-configured by the base station is usually unique. For example, one cell can be uniquely determined through the second identifier. However, a disadvantage of this identifier is that it is long, that is, occupies a large quantity of bits. In this embodiment, the first identifier is a short identifier. The terminal indicates an association relationship between the first cell and the first TA through one short identifier, so that resources for TA reporting can be reduced.

Optionally, the first identifier is an identifier of a first TA group. A communication unit corresponding to the first TA group includes the first communication unit.

Optionally, the first identifier is an index of the first communication unit. The second identifier is an identifier of the first communication unit.

Optionally, the first identifier is an index of a first aircraft. The second identifier is an identifier of the first aircraft. The first communication unit is a communication unit of the first aircraft.

Optionally, the first identifier is an index of a first logical channel, and the second identifier is an identifier of the first logical channel. The first logical channel has an association relationship with the first communication unit; and/or the first logical channel has an association relationship with a first aircraft, and the first communication unit is a communication unit of the first aircraft.

According to a third aspect, an embodiment of this application provides a communication apparatus. The communication apparatus may include a processing unit and a transceiver unit, and is configured to perform the method according to any one of the first aspect and the optional implementations of the first aspect. The transceiver unit is a sending unit when performing a sending step. The transceiver unit is a receiving unit when performing a receiving step.

According to a fourth aspect, an embodiment of this application provides a communication apparatus. The communication apparatus may include a processing unit and a transceiver unit, and is configured to perform the method according to any one of the second aspect and the optional implementations of the second aspect. The transceiver unit is a sending unit when performing a sending step. The transceiver unit is a receiving unit when performing a receiving step.

According to a fifth aspect, an embodiment of this application provides a communication apparatus. The communication apparatus may be a terminal, or may be a chip used in the terminal. The communication apparatus may include a processor, and is configured to perform the method according to any one of the first aspect and the optional implementations of the first aspect.

Optionally, when the communication apparatus is the terminal, the processor is, for example, a system on chip (system on chip, SoC) or a central processing unit (central processing unit, CPU). When the communication apparatus is the chip, the processor is, for example, a core (core). The core may include at least one execution unit (execution unit). The execution unit is, for example, an arithmetic and logic unit (arithmetic and logic unit, ALU).

Optionally, the communication apparatus may further include a transceiver. When the communication apparatus is the terminal, the transceiver may be a transceiver circuit, an antenna, or the like. When the communication apparatus is the chip, the transceiver may be an input/output interface, a pin, a circuit, or the like.

Optionally, the communication apparatus may further include a memory. The memory is configured to store a computer program or instructions. The processor executes the computer program or the instructions stored in the memory, to enable the communication apparatus to perform the method according to any one of the first aspect and the optional implementations of the first aspect. When the communication apparatus is the terminal, the memory may be a read-only memory, a random access memory, or the like. When the communication apparatus is the chip, the memory may be a register, a cache, or the like.

According to a sixth aspect, an embodiment of this application provides a communication apparatus. The communication apparatus may be a base station, or may be a chip used in the base station. The communication apparatus may include a processor, and is configured to perform the method according to any one of the second aspect and the optional implementations of the second aspect.

Optionally, when the communication apparatus is the base station, the processor is, for example, a CPU, an application-specific integrated circuit (application-specific integrated circuit, ASIC), or a field programmable gate array (field programmable gate array, FPGA). When the communication apparatus is the chip, the processor is, for example, a core. The core may include at least one execution unit. The execution unit is, for example, an ALU.

Optionally, the communication apparatus may further include a transceiver. When the communication apparatus is the base station, the transceiver may be a transceiver circuit, an antenna, or the like. When the communication apparatus is the chip, the transceiver may be an input/output interface, a pin, a circuit, or the like.

Optionally, the communication apparatus may further include a memory. The memory is configured to store a computer program or instructions. The processor executes the computer program or the instructions stored in the memory, to enable the communication apparatus to perform the method according to any one of the second aspect and the optional implementations of the second aspect. When the communication apparatus is the base station, the memory may be a read-only memory, a random access memory, or the like. When the communication apparatus is the chip, the memory may be a register, a cache, or the like.

According to a seventh aspect, an embodiment of this application provides a communication system. The communication system includes the communication apparatus according to the third aspect and the communication apparatus according to the fourth aspect, or the communication apparatus according to the fifth aspect and the communication apparatus according to the sixth aspect.

According to an eighth aspect, an embodiment of this application provides a computer-readable storage medium. The computer-readable storage medium stores a computer program. When the computer program is executed on a communication apparatus, the communication apparatus is enabled to perform the method according to any one of the first aspect and the optional implementations of the first aspect or the method according to any one of the second aspect and the optional implementations of the second aspect.

According to a ninth aspect, an embodiment of this application provides a computer program product. The computer program product includes computer program code or computer program instructions. When the computer program code or the computer program instructions are run on a communication apparatus, the communication apparatus is enabled to perform the method according to any one of the first aspect and the optional implementations of the first aspect or the method according to any one of the second aspect and the optional implementations of the second aspect.

### BRIEF DESCRIPTION OF DRAWINGS

FIG. 1 is a diagram of an architecture of a communication system to which an embodiment of this application is applied;
FIG. 2 is a diagram of a structure of a radio access network node according to an embodiment of this application;
FIG. 3 is a diagram of an NTN architecture including a satellite in transparent mode according to an embodiment of this application;
FIG. 4 is a diagram of an NTN architecture including a satellite in regenerative mode according to an embodiment of this application;
FIG. 5 is a diagram of another NTN architecture including a satellite in regenerative mode according to an embodiment of this application;
FIG. 6 is a diagram of a TA mechanism of an NTN according to an embodiment of this application;
FIG. 7 is a diagram of orbit information represented in a Keplerian orbit format according to an embodiment of this application;
FIG. 8 is a diagram of orbit information represented by a state vector according to an embodiment of this application;
FIG. 9 is a diagram of NTN cells according to an embodiment of this application;
FIG. 10 is a schematic flowchart of cell handover according to an embodiment of this application;
FIG. 11 is a diagram of NTN cells after handover according to an embodiment of this application;
FIG. 12 is a diagram of a communication method according to an embodiment of this application;
FIG. 13 is a diagram of a MAC CE according to an embodiment of this application;
FIG. 14 is a diagram of another MAC CE according to an embodiment of this application;
FIG. 15 is a diagram of PUSCH transmission in a terrestrial network according to an embodiment of this application;
FIG. 16 is a diagram of PUSCH transmission in an NTN according to an embodiment of this application;
FIG. 17 is a diagram of a structure of a communication apparatus according to an embodiment of this application;
FIG. 18 is a diagram of a structure of another communication apparatus according to an embodiment of this application;
FIG. 19 is a diagram of a structure of a terminal according to an embodiment of this application; and
FIG. 20 is a diagram of a structure of a base station according to an embodiment of this application.

### DESCRIPTION OF EMBODIMENTS

The following describes technical solutions in this application with reference to accompanying drawings.

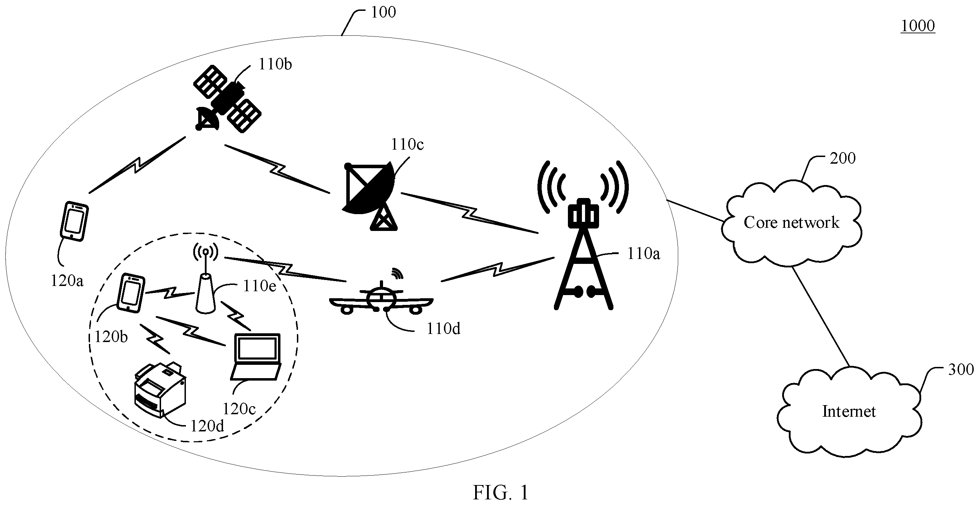

FIG. 1 is a diagram of an architecture of a communication system 1000 to which an embodiment of this application is applied. As shown in FIG. 1, the communication system includes a radio access network (radio access network, RAN) 100. The RAN 100 includes at least one RAN node (for example, 110a to 110e in FIG. 1, which are collectively referred to as 110), and may further include at least one terminal (for example, 120a to 120d in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner. The RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may alternatively include the foregoing two or more different radio access systems. The RAN 100 may alternatively be an open RAN (open RAN, O-RAN).

The RAN node, also referred to as a network device, a radio access network device, a RAN entity, or an access node, is configured to help the terminal access the communication system in a wireless manner.

In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access point (access point, AP) in a Wi-Fi system, an AP in a long range radio (long range radio, LoRa) system, or an AP in an internet of vehicles system. The RAN node may be a macro base station (for example, 110a in FIG. 1), or may be a micro base station or an indoor base station (for example, 110e in FIG. 1), or may be a relay node (for example, 110b and 110c in FIG. 1).

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), or a radio unit (radio unit, RU). The CU completes functions of a radio resource control (radio resource control, RRC) protocol and a packet data convergence protocol (packet data convergence protocol, PDCP) of the base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete a function of a part or all of a physical (physical, PHY) layer. For specific descriptions of the foregoing protocol layers, refer to related technical specifications of the 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU), an active antenna unit (active antenna unit, AAU), or a remote radio head (remote radio head, RRH).

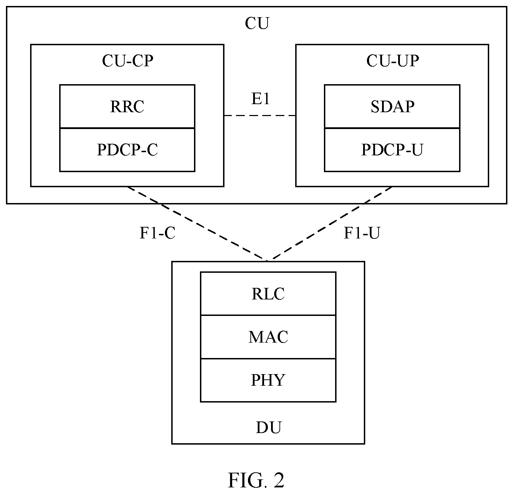

The CU may be further divided into two types of RAN nodes: a CU control plane (central unit control plane, CU-CP) and a CU user plane (central unit user plane, CU-UP). As shown in FIG. 2, the CU-CP is responsible for control plane functions, and mainly includes RRC and a PDCP control plane (PDCP-C). The PDCP-C is mainly responsible for encryption and decryption, integrity protection, data transmission, and the like of control plane data. The CU-UP is responsible for user plane functions, and mainly includes the SDAP and a PDCP user plane (PDCP-U). The SDAP is mainly responsible for processing data of the core network and mapping a flow (flow) to a bearer. The PDCP-U is mainly responsible for encryption and decryption, integrity protection, header compression, sequence number maintenance, data transmission, and the like of a data plane. The CU-CP is connected to the CU-UP through an E1 interface. The CU-CP represents that the base station is connected to the core network through a next generation (next generation, NG) interface. The CU-CP is connected to the DU through an F1 control plane (F1-C) interface. The CU-UP is connected to the DU through an F1 user plane (F1-U) interface. Certainly, in another possible implementation, the PDCP-C is alternatively in the CU-UP.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses an example in which the base station is used as a RAN node for description.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, and a smart city. The terminal may be a mobile phone (for example, 120a and 120b in FIG. 1), a tablet computer (for example, 120c in FIG. 1), a printer with a wireless transceiver function (for example, 120d in FIG. 1), a wearable device, a vehicle, a charging pile, an airplane, a ship, a robot, a robot arm, a smart home device, or the like. A specific technology and a specific device form that are used by the terminal are not limited in embodiments of this application.

As an example rather than a limitation, in embodiments of this application, the wearable device may also be referred to as a wearable intelligent device, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized electronic devices that can implement complete or partial functions without depending on smartphones, for example, smart watches or smart glasses, or include electronic devices that are dedicated to only one type of application function and that need to be used together with other devices such as smartphones, for example, various smart bands or smart jewelry used for measuring physical signs.

As an example rather than a limitation, in embodiments of this application, the vehicle may be a smart car (smart car or intelligent car), a digital car (digital car), an unmanned car (unmanned car, driverless car, pilotless car, or automobile), a self-driving car (self-driving car or autonomous car), or an electric vehicle (electric vehicle, EV). The EV may be a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), or a new energy vehicle (new energy vehicle). If various terminals described above are located in a vehicle (for example, placed in the vehicle or installed in the vehicle), the terminals may be all considered as vehicle-mounted terminals. The vehicle-mounted terminals may also be referred to as in-vehicle modules, in-vehicle chips, or on-board units (on-board units, OBUs).

The base station and the terminal may be stationary or mobile. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, 110d in FIG. 1 (which may be a helicopter or an uncrewed aerial vehicle) may be configured as a mobile base station. For a terminal accessing the radio access network 100 via 110d, 110d is a base station. However, for 110a, 110d is a terminal. In other words, 110a and 110d communicate with each other based on a wireless air interface protocol. Certainly, communication between 110a and 110d may alternatively be performed based on an interface protocol between base stations. In this case, for 110a, 110d is also a base station. Therefore, both the base station and the terminal may be collectively referred to as communication apparatuses. 110a to 110e in FIG. 1 each may be referred to as a communication apparatus having a function of the base station. 120a to 120d in FIG. 1 each may be referred to as a communication apparatus having a function of the terminal.

Communication between the base station and the terminal, between the base stations, or between the terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

In embodiments of this application, the base station sends downlink information to the terminal. The downlink information is carried on a downlink channel. The downlink information may also be referred to as a downlink signal. The terminal sends uplink information to the base station. The uplink information is carried on an uplink channel. The uplink information may also be referred to as an uplink signal. To communicate with the base station, the terminal needs to establish a wireless connection to a cell controlled by the base station. The cell that establishes the wireless connection to the terminal is referred to as a serving cell of the terminal.

For ease of understanding of embodiments of this application, technologies in embodiments of this application are briefly described below.

### 1. NTN

A network in which communication is implemented through a non-terrestrial network device may be referred to as an NTN. The NTN may include an air network device such as a satellite or a high altitude platform station (high altitude platform station, HAPS). Featuring a wide coverage area, a long communication distance, high reliability, high flexibility, a high throughput, and the like, the NTN is not affected by a geographical environment, a climate condition, or a natural disaster, and has been widely used in various fields. For example, the NTN may provide a communication service for an area that is difficult to be covered by a terrestrial network (for example, an ocean, a forest, a desert, or a remote region). In addition, the NTN may enhance reliability of mobile communication, for example, provide a more stable communication service for users in a high-speed movement scenario, such as a train or an airplane. Moreover, the NTN may further provide more data transmission resources, and support connections of more terminal devices. The following uses an NTN including a satellite as an example for description.

Generally, a higher orbit of a satellite indicates a larger coverage area but a longer communication delay of the satellite. Satellites may be classified by orbital altitude into a geosynchronous earth orbit (geostationary earth orbit, GEO) satellite, a medium earth orbit (medium earth orbit, MEO) satellite, and a low earth orbit (low earth orbit, LEO) satellite.

An orbital altitude of the GEO satellite is about 35,000 km. The GEO satellite is stationary relative to the ground and can provide a large coverage area. However, a distance between the GEO satellite and the ground is excessively long, and an antenna with a large diameter is required to perform communication. The excessively long distance also causes a long transmission delay of the GEO satellite, and cannot meet a requirement of a real-time service. In addition, limited synchronous orbit resources, high launch costs, and inability to cover polar regions are all factors that restrict development of the GEO satellite.

An orbital altitude of the MEO satellite is about 2,000 km to 35,000 km. The orbital altitude of the MEO satellite is lower than the orbital altitude of the GEO satellite but higher than an orbital altitude of the LEO satellite. In this way, a small quantity of MEO satellites can be used to implement global coverage. Currently, the MEO satellite is mainly used in positioning and navigation.

The orbital altitude of the LEO satellite is about 300 km to 2,000 km. The LEO satellite has a lower orbital altitude, and therefore, has a shorter transmission delay and lower launch costs than the GEO satellite and the MEO satellite. Therefore, a communication system based on the LEO satellite has greatly progressed in recent years.

Generally, working modes of satellites may be classified into two categories: a transparent (transparent) mode and a regenerative (regenerative) mode. The following separately describes the two modes.

### 1.1. Transparent mode

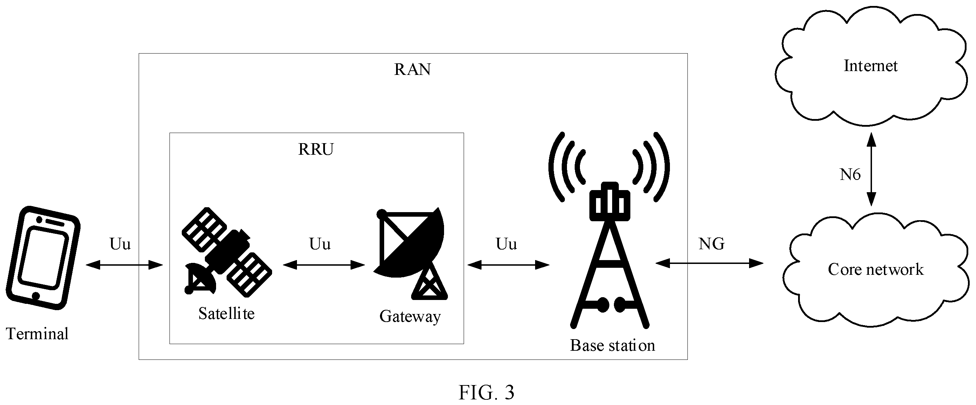

FIG. 3 is a diagram of an NTN architecture including a satellite in transparent mode. In transparent mode, a main function of the satellite is layer (layer, L) 1 relay, for example, processing such as radio frequency filtering, frequency conversion, and amplification is performed on a physical layer signal, and the satellite does not have a function of a higher protocol layer. A terminal is connected to a terrestrial network device through the satellite. The terrestrial network device includes a gateway and a base station shown in FIG. 3. In transparent mode, the satellite and the gateway may be considered as an RRU, and the satellite, the gateway, and the base station jointly implement a function of a RAN. Optionally, the gateway may alternatively be integrated with the base station.

For example, for an uplink, the terminal sends an uplink signal (carrying uplink data of the terminal) through a Uu interface. After receiving the uplink signal, the satellite forwards the uplink signal to the gateway (the satellite may perform frequency conversion on the signal). The gateway forwards the uplink signal to the base station. After receiving the uplink signal, the base station performs related processing to obtain data that needs to be sent by the terminal to a core network, and may send the data to the core network through an interface (for example, an NG interface) between the base station and the core network. The core network may send the data to an internet through an N6 interface. For a downlink, the internet may send downlink data to the core network through the N6 interface. The core network sends the downlink data to the base station through the interface between the base station and the core network. After receiving the downlink data, the base station performs related processing to generate a downlink signal (carrying the downlink data), and may send the downlink signal to the gateway through a Uu interface. The gateway sends the downlink signal to the satellite. The satellite forwards the downlink signal to the terminal (the satellite may perform frequency conversion on the signal).

It should be noted that in the descriptions of this application, names of interfaces are examples rather than limitations. As technologies develop, other interfaces with a same or similar function may appear. These new interfaces are also applicable to this application. An interface for transmitting data between devices is not limited in this application.

### 1.2. Regenerative mode

In regenerative mode, a satellite has some or all functions of a base station. For example, the satellite may perform processing at layers such as a physical layer, a MAC layer, and an RLC layer on a signal received from the ground. A gateway may forward signaling and data between the satellite and a core network.

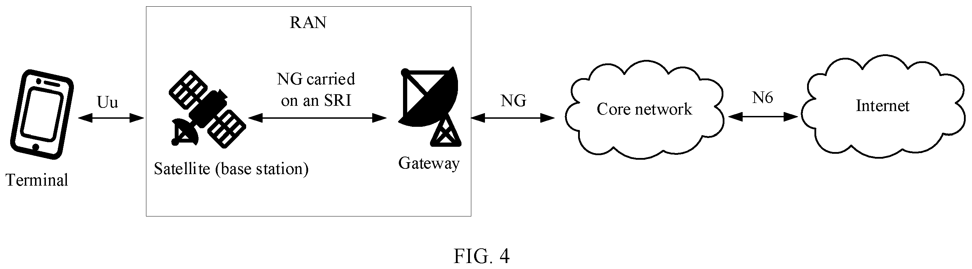

FIG. 4 is a diagram of an NTN architecture including a satellite in regenerative mode. In this architecture, the satellite has all functions of the base station, and may be considered as a base station. The satellite and a gateway jointly implement a function of a RAN. A terminal communicates with the satellite through a Uu interface. The satellite communicates with a core network through an NG interface. An NG interface between the satellite and the gateway is carried on a satellite radio interface (satellite radio interface, SRI). The core network communicates with an internet through an N6 interface.

In regenerative mode, satellites can communicate with each other because the satellites have the functions of the base station.

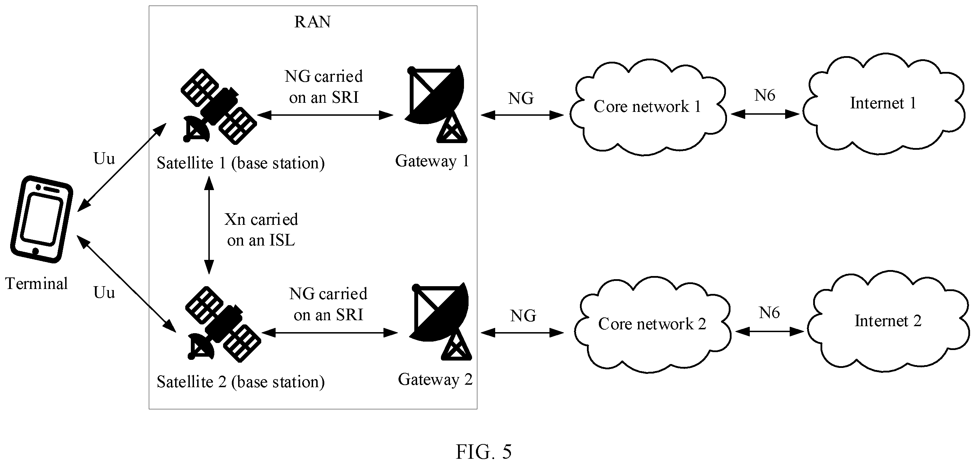

FIG. 5 is a diagram of another NTN architecture including a satellite in regenerative mode. In this architecture, a satellite 1 and a satellite 2 have all functions of the base station, and may be considered as base stations. A terminal communicates with the satellite through a Uu interface. Optionally, the terminal may simultaneously communicate with a plurality of satellites (for example, the satellite 1 and the satellite 2). The satellite communicates with a core network through an NG interface. An NG interface between the satellite and a gateway is carried on an SRI. The satellite 1 and the satellite 2 communicate with each other through an Xn interface carried on an inter-satellite link (inter-satellite link, ISL). The core network communicates with an internet through an N6 interface.

The foregoing classification of the NTN architectures is an example rather than a limitation, and an NTN architecture applicable to this application is not limited thereto. For example, each satellite may provide a service for a plurality of terminals, each satellite may communicate with a plurality of gateways, and each gateway may also communicate with a plurality of satellites. In addition, a DU function may be further deployed on the satellite, and a CU function may be further deployed on a terrestrial network device.

### 2. TA

One requirement for uplink transmission is that uplink transmissions from different UEs in a same cell do not interfere with each other. To ensure orthogonality of uplink transmission and avoid intra-cell (intra-cell) interference, a base station requires that moments at which uplink signals (in a same subframe but on different frequency domain resources) from a plurality of terminal devices arrive at the base station fall within a cyclic prefix (cyclic prefix, CP) range. In view of this, a TA mechanism is introduced into a wireless communication system.

From a perspective of a terminal, a TA is essentially a negative offset (negative offset) between a start moment at which a downlink subframe is received and a moment at which an uplink subframe is transmitted. The base station may control, by properly controlling an offset of each terminal, moments at which uplink signals from different terminals arrive at the base station. Due to a long transmission delay, a terminal away from the base station needs to send an uplink signal earlier than a terminal close to the base station. In other words, a TA of the terminal away from the base station is greater than a TA of the terminal close to the base station.

For an NTN, due to addition of a satellite, its TA mechanism is more complex than a TA mechanism of a terrestrial network.

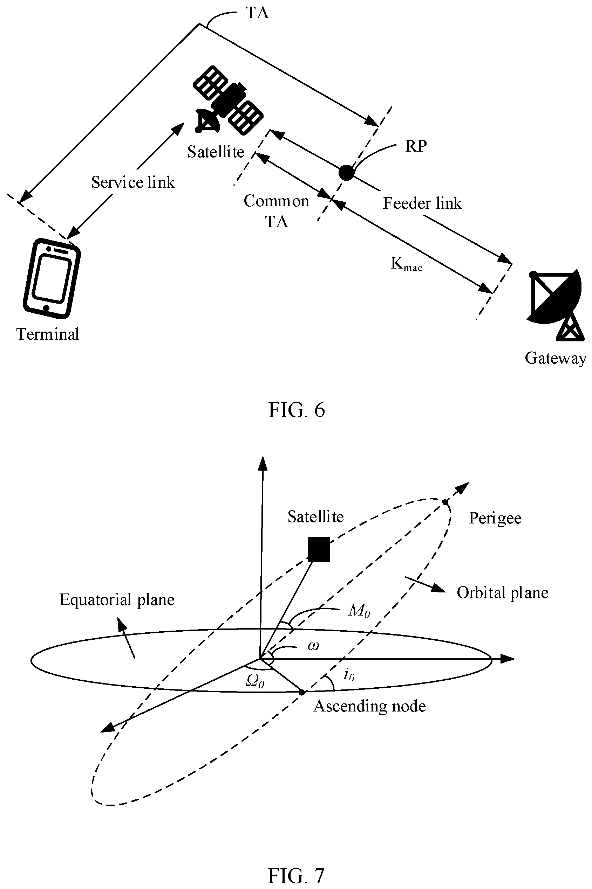

FIG. 6 is a diagram of a TA mechanism of an NTN according to an embodiment of this application. In an NTN, a link between a terminal and a satellite is referred to as a service link (service link), and a link between the satellite and a gateway is referred to as a feeder link (feeder link). Both links are radio links. Therefore, a TA of the NTN includes two parts: a transmission delay on the service link and a transmission delay on the feeder link.

### 2.1. Calculation of the transmission delay on the service link

The transmission delay on the service link may be determined by the terminal. For example, the terminal may calculate the transmission delay on the service link based on global navigation satellite system (global navigation satellite system, GNSS) information and ephemeris information.

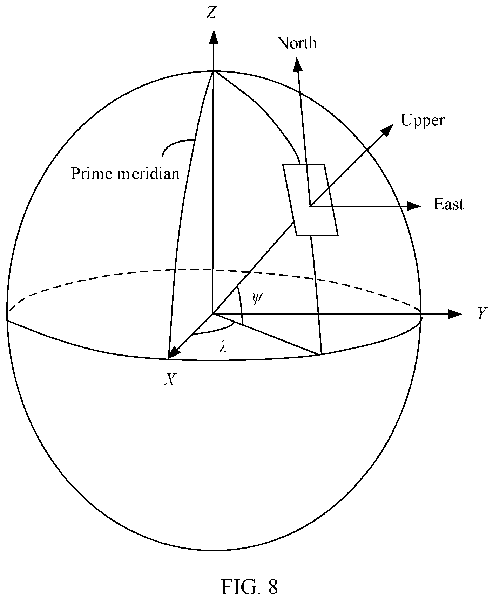

Ephemeris information of a cell may also be referred to as orbit information, and is running path information of a non-terrestrial network device associated with the cell, or may be referred to as ephemeris information of the non-terrestrial network device associated with the cell. For a manner of determining or describing the ephemeris information, refer to FIG. 7 or FIG. 8. FIG. 7 is a diagram of orbit information represented in a Keplerian orbit format according to an embodiment of this application. FIG. 8 is a diagram of orbit information represented by a state vector according to an embodiment of this application.

Parameters shown in FIG. 7 include an orbit-level parameter. For example, *i₀* is an inclination, *Ω₀* is a longitude of an ascending node (ascending node) of an orbital plane, and *ω* is an argument of a perigee (perigee). The foregoing orbit-level parameter is used to determine a running orbit. The parameters shown in FIG. 7 further include a satellite-level parameter, used to determine a location of a satellite. For example, *M₀* is used as a mean anomaly, and is used for reference time.

When the orbit information is represented by the state vector, a speed vector in the state vector, such as (*vₓ*, *v_{y}*, *v_{z}*), requires provision of information about a rate and a reference point for a non-synchronous satellite. A location coordinate system on which the state vector is based may be a longitude-latitude-altitude coordinate system (*λ*, *ψ*, *h*) shown in FIG. 8, an earth-centered earth-fixed coordinate system (*X*, *Y*, *Z*), or the like. This is not limited in embodiments of this application. In this description manner, the foregoing parameters are parameters corresponding to the reference time.

### 2.2. Calculation of the transmission delay on the feeder link

The transmission delay on the feeder link may be determined by a network side (for example, a base station). As shown in FIG. 6, the transmission delay on the feeder link includes two parts: a common timing advance (common timing advance, Common TA), indicating a transmission delay between the satellite and an uplink synchronization reference point (reference point, RP); and a transmission delay between the RP and the base station or an NTN gateway (gateway), which is represented by K_{mac}. The base station may notify the terminal of K_{mac} of a corresponding serving cell. For example, the base station indicates a value of K_{mac} in a system information block (system information block, SIB) 19.

In addition, in a communication process, because transmission in a propagation process is not ideal linear transmission, the network side (for example, the base station) adjusts an uplink sending moment of the terminal based on an uplink signal sent by the terminal, that is, sends a TA adjustment value (which may also be referred to as a TA offset) to the terminal.

The terminal determines a total TA (for example, a TA shown in FIG. 6) based on the common TA on the feeder link, the transmission delay on the service link, and the TA adjustment value sent by the network side, and reports the TA to the network side.

After the terminal reports the TA, due to mobility of the terminal and the satellite, a distance between the terminal and the satellite, a distance between the satellite and the gateway, and a signal transmission channel may change over time. Therefore, the terminal needs to continuously calculate a new TA, to maintain uplink synchronization.

The network side may control, based on the following rules, the terminal to report a TA:
Rule 1: The network side indicates, through a broadcast message, the terminal whether to report a TA when initially accessing a cell. If the terminal is indicated to need to report the TA, the terminal triggers TA reporting when the terminal initially accesses the cell.
Rule 2: When the network side configures a TA change reporting threshold for the terminal, if the terminal has not reported a TA before a current serving cell, the terminal triggers TA reporting when receiving the TA change reporting threshold.
Rule 3: When a difference between a latest TA and a previously reported TA of the terminal exceeds the TA change reporting threshold, the terminal also triggers TA reporting.

The foregoing description of calculating the TA and updating the TA is an example rather than a limitation. Specific manners of calculating the TA and updating the TA are not limited in this application.

### 3. Cell

A cell may be considered as a wireless signal coverage area identified by a physical cell identifier (physical cell identifier, PCI) or a cell global identifier (cell global identifier, CGI). Different cells may alternatively be distinguished through serving cell indexes (serving cell indexes). A manner of identifying a cell is not limited in embodiments of this application.

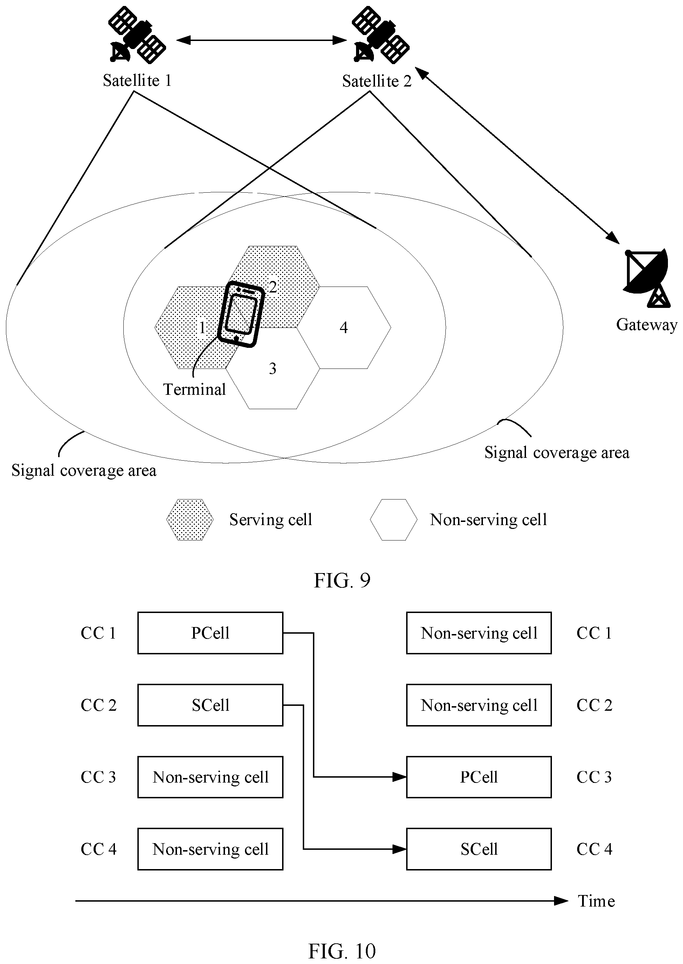

A coverage area of each base station may be divided into one or more cells. FIG. 9 is a diagram of cells according to an embodiment of this application. Four hexagons near a terminal represent four cells. The four cells are located in signal coverage areas of a satellite 1 and a satellite 2. In embodiments of this application, different cells may correspond to different base stations, or may correspond to a same base station.

For example, a base station corresponding to a cell 1 and a base station corresponding to a cell 2 may be different base stations. In other words, the satellite 1 corresponding to the cell 1 and the satellite 2 corresponding to the cell 2 belong to different base stations. The base station corresponding to the cell 1 and the base station corresponding to the cell 2 may alternatively be a same base station. In other words, the satellite 1 corresponding to the cell 1 and the satellite 2 corresponding to the cell 2 belong to a same base station, or both the cell 1 and the cell 2 are cells of the satellite 1, or both the cell 1 and the cell 2 are cells of the satellite 2. The latter case may be referred to as co-site of the cell 1 and the cell 2.

Cells that provide services for the terminal may be classified into a primary cell (primary cell, PCell) and a secondary cell (secondary cell, SCell). Therefore, both the PCell and the SCell may be referred to as serving cells (serving cells) of the terminal. After an RRC connection is established, the base station may configure an SCell for the terminal to provide additional radio resources. In a carrier aggregation (carrier aggregation, CA) scenario, the base station may configure one PCell and one or more SCells for the terminal. The PCell is a cell in which the terminal maintains an RRC connection to the base station, and the other serving cells of the terminal may be referred to as SCells. SCells may be flexibly activated/deactivated through downlink control information (downlink control information, DCI) or a MAC control element (control element, CE).

The foregoing description of the cell is an example rather than a limitation. As technologies develop, concepts that have a same or similar function as the cell may appear. These concepts are also applicable to embodiments of this application.

Due to mobility of the terminal or a change in a channel state, a cell connected to the terminal changes. In other words, the terminal may be handed over from a cell to another cell. The cell before the handover may be referred to as a source cell or an anchor (anchor) cell. The cell after the handover may be referred to as a target cell.

For example, in FIG. 9, component carriers (component carriers, CCs) corresponding to a cell 1 to a cell 4 are respectively a CC 1 to a CC 4. The terminal currently uses the CC 1 and the CC 2 for communication. The cell 1 corresponding to the CC 1 is a PCell. The cell 2 corresponding to the CC 2 is an SCell. The terminal can also use the CC 3 and the CC 4 for communication. However, a network side has not configured the CC 3 and the CC 4 for the terminal device, that is, the CC 3 and the CC 4 are not activated, and the cell 3 corresponding to the CC 3 and the cell 4 corresponding to the CC 4 are non-serving cells (non-serving cells). As the terminal or the satellite moves, channel states of the CC 1 and the CC 2 deteriorate. The terminal may use the CC 3 and the CC 4 for communication, and no longer use the CC 1 and the CC 2 for communication. In other words, the network side reconfigures a PCell and an SCell.

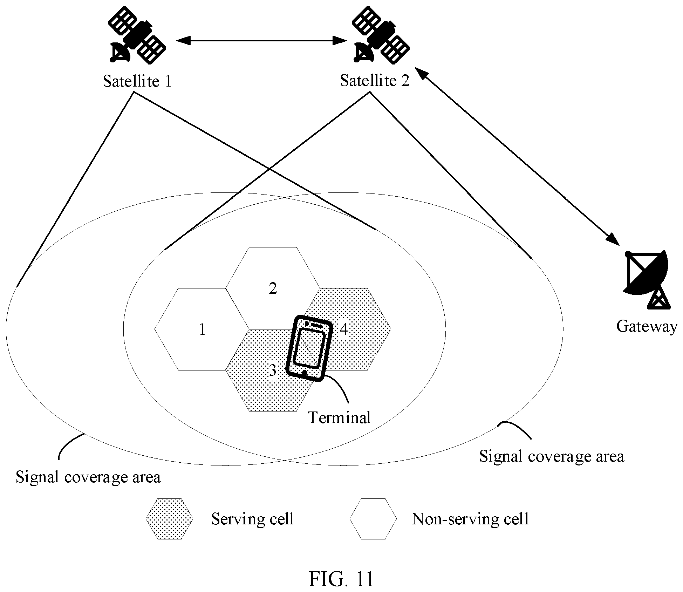

A cell handover process is shown in FIG. 10. The terminal may be handed over from the cell 1 to the cell 3, and handed over from the cell 2 to the cell 4. The cell 1 and the cell 2 are cells before the handover and may be referred to as source cells. The cell 3 and the cell 4 are cells after the handover and may be referred to as target cells. After the cell handover is completed, the cell corresponding to the CC 3 is a PCell, the cell corresponding to the CC 4 is an SCell, and the cells corresponding to the CC 1 and the CC 2 become non-serving cells. A process from the CC 1 to the CC 3 may be referred to as PCell handover. A process from the CC 2 to the CC 4 may be referred to as SCell handover (or activation). After the cell handover is completed, a status of cells used by the terminal is shown in FIG. 11.

It should be understood that the cell handover may be handover from a cell of a base station to a cell of another base station, or may be handover between different cells of a same base station. In addition, the cell handover may be triggered by the base station, the terminal, or a thirdparty device other than the base station and the terminal.

### 5. Multi-connectivity

Multi-connectivity includes CA, dual connectivity (dual connectivity, DC), and multi-TRP. The following separately describes the three technologies.

### 5.1. CA

CA is a technology in which a single terminal simultaneously uses a plurality of CCs for data transmission, enabling large-bandwidth transmission and effectively improving an uplink or downlink transmission rate. The terminal may determine, based on its capability, a maximum quantity of CCs that can be simultaneously used for transmission. For example, in a three-carrier aggregation scenario, the terminal may simultaneously use three CCs. In CA, the plurality of CCs may be managed by a same base station.

For a CA scenario, refer to FIG. 9 or FIG. 11. FIG. 11 is used as an example. Serving cells of the terminal include a cell 3 and a cell 4, and an RRC connection is established between the terminal and the cell 3. In this case, the cell 3 is a PCell. A CC corresponding to the PCell is a primary component carrier (primary component carrier, PCC). When sending an RRC reconfiguration message to the terminal, a network side configures the cell 4 as an SCell, and establishes a communication connection to the cell 4. The communication connection is not an RRC connection. A CC corresponding to the SCell is a secondary component carrier (secondary component carrier, SCC). CA allows a physical downlink control channel (physical downlink control channel, PDCCH) and a physical downlink shared channel (physical downlink shared channel, PDSCH) to be carried on different CCs, that is, allows cross-carrier scheduling.

Based on whether CCs participating in aggregation belong to a same frequency band and are contiguous in frequency domain, CA may be classified into intra-band contiguous CA, intra-band non-contiguous CA, and inter-band CA. For intra-band contiguous CA, CCs participating in aggregation belong to a same frequency band and are contiguous in frequency domain. For intra-band non-contiguous CA, CCs belong to a same frequency band but are non-contiguous in frequency domain. For inter-band CA, CCs belong to different frequency bands.

A quantity of CCs supported by a base station is usually greater than a quantity of CCs supported by a terminal. For example, the base station may support carrier aggregation of 16 downlink CCs, and the terminal usually supports carrier aggregation of 2 or 3 downlink CCs. However, the terminal may select 2 or 3 downlink CCs from the 16 downlink CCs for carrier aggregation. If a service is busy or a channel condition is poor on a currently used CC, the terminal may perform CC handover, that is, perform cell handover, so that a capability of the terminal can be matched, and load balancing of the base station can be implemented, to improve user experience.

In embodiments of this application, both a CC and a cell are concepts used to describe frequency domain resources, and may be equivalently replaced. As technologies develop, other concepts used to describe frequency domain resources may appear. On the premise of no logic violation, the CC or the cell may be alternatively replaced with other concepts used to describe frequency domain resources.

### 5.2. DC

Similar to CA, dual connectivity also provides a service for a same terminal through a second cell, a third cell, or more cells, to obtain more bandwidth resources for data transmission. Therefore, DC does not limit a quantity of serving cells connected to the terminal. In DC, these cells or carriers may belong to different base stations. For example, a base station that has an RRC connection to the terminal is referred to as a primary base station, and another base station is referred to as a secondary base station.

In an optional example, in DC, a network side may configure a master cell group (master cell group, MCG) and a secondary cell group (secondary cell group, SCG) for the terminal. For example, for a terminal in connected mode, if the network side configures an MCG and an SCG for the terminal, the MCG is a cell group corresponding to the primary base station, and the SCG is a cell group corresponding to the secondary base station.

In an optional example, CA and DC may be distinguished based on different layers of data splitting. For example, DC usually performs data splitting at a PDCP layer, and CA usually performs data splitting at a MAC layer. In other words, DC may be implemented at a higher protocol layer.

In addition, DC may be implemented between networks of different standards, but CA can be generally implemented only in a network of a same standard. DC between different standards is also referred to as multi-radio access technology dual connectivity (multi-radio access technology dual connectivity, MR-DC), for example, a non-standalone (non-standalone, NSA) network.

### 5.3. Multi-TRP (multi-TRP, mTRP)

CA and DC above require that different serving cells correspond to different carriers. In the mTRP technology, a plurality of TRPs may operate on a same carrier. In a high-frequency communication scenario (for example, an FR2 frequency band), a transmission link is more likely to be blocked by an obstacle such as a vehicle or a human body, resulting in a radio link failure. Cooperation of a plurality of TRPs can overcome an adverse condition in high-frequency communication, to help maintain a reliable connection. In addition, jointly serving a terminal by the plurality of TRPs can increase a transmission capacity and improve cell edge user experience. In mTRP, these mTRPs may belong to a same cell, or may belong to different cells. mTRP may be further classified into mTRP for single-DCI scheduling and mTRP for multi-DCI scheduling.

### (1) mTRP for single-DCI scheduling

In a single-DCI scheduling scenario, an ideal backhaul is required between a plurality of TRPs. A single piece of DCI schedules uplink and downlink data transmission of the plurality of TRPs. Uplink and downlink data from different TRPs may be scheduled through time division/frequency division/space division.

### (2) mTRP for multi-DCI scheduling

In a multi-DCI scheduling scenario, there is no need for an ideal backhaul between a plurality of TRPs. Each TRP may separately send DCI to schedule a terminal to perform uplink and downlink data transmission.

In an NTN, a TA is determined by a terminal. When the terminal is in a multi-connectivity state, the terminal simultaneously communicates with a base station through a plurality of cells. After receiving the TA, the base station cannot determine a cell or a TRP corresponding to the TA. The following describes a communication method provided in embodiments of this application.

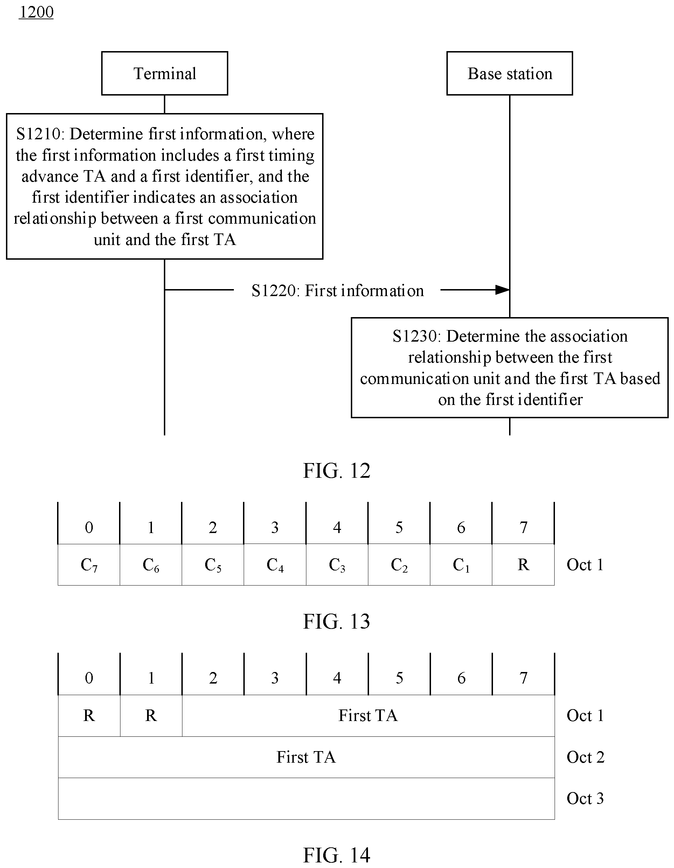

As shown in FIG. 12, a method 1200 includes the following content.

S1210: Determine first information. The first information includes a first TA and a first identifier. The first identifier indicates an association relationship between a first communication unit and the first TA.

In the method 1200, the first communication unit may be a first cell, a first satellite, a first base station, a first carrier, a first TRP, or the like. The following uses an example in which the first communication unit is the first cell for description.

Optionally, a terminal may perform S1210 in the following several cases.

Case 1: The terminal receives a TA reporting indication delivered by a base station.

For example, the TA reporting indication is a ta-report information element (information element, IE). The ta-report IE may be carried in SIB19. If the ta-report IE is carried in SIB19, the terminal reports a TA in a random access procedure during RRC connection establishment, RRC connection reestablishment, or RRC connection recovery. Alternatively, the ta-report IE may be carried in dedicated signaling, for example, may be carried in a cell handover command. If the ta-report IE is carried in the cell handover command, the terminal reports a TA in a random access procedure during cell handover or reports a TA when accessing a target cell.

Case 2: The terminal receives a TA change reporting threshold offsetThresholdTA configured by a base station, and the terminal has not reported a TA of a current serving cell.

Case 3: A base station configures offsetThresholdTA for the terminal, and a variation between a currently estimated TA and a previously reported TA of the terminal exceeds the threshold offsetThresholdTA.

Case 4: The terminal determines whether a first condition is satisfied. The first condition includes: Second information is received. The second information indicates to activate the first communication unit, or the second information indicates to hand over to the first communication unit.

For example, the first communication unit is the first cell, and the first cell is a deactivated SCell. When receiving the second information, the terminal triggers reporting of a TA of the first cell. The second information may be SCell activation signaling, for example, an SCell activation MAC CE.

Optionally, as shown in FIG. 13, the SCell activation MAC CE includes at least one octet (octet, Oct). An Oct 1 includes 7 bits indicating to activate a secondary cell and 1 reserved (reserved, R) bit. A bit Cᵢ is any one of the 7 bits and indicates whether to activate a secondary cell i. For example, if C₇ is 1, it indicates to activate a secondary cell 7 (an example of the first cell). If C₇ is 0, it indicates not to activate the secondary cell 7.

Optionally, the second information may alternatively be enhanced secondary cell activation information (for example, an enhanced SCell activation MAC CE) or secondary cell state information (for example, sCellState).

In Case 4, the second information is used as a condition for triggering reporting of the TA, so that the terminal can report the TA as soon as possible when the first communication unit is activated or the first communication unit is handed over to. In comparison with indicating the terminal through other information to report the TA, in this embodiment, a TA reporting delay can be reduced.

Optionally, the first condition may further include other content. For example, the first condition may further include: Reporting of at least one TA is triggered and the triggered TA reporting is not canceled; and an uplink shared channel (uplink shared channel, UL-SCH) is available, and the UL-SCH is sufficient to carry a TA report. The other content included in the first condition is not limited in embodiments of this application.

Case 1 is an example of triggering TA reporting in a random access scenario. Case 2, Case 3, and Case 4 are examples of triggering TA reporting in a connected mode scenario. A specific manner of triggering the terminal to report the TA is not limited in embodiments of this application.

The first information may be MAC layer information or physical layer information. A specific type of the first information is not limited in embodiments of this application. For example, the first information is the MAC layer information, and the first information may be a TA report carried in a MAC CE.

The first TA is the TA of the first cell. The terminal may determine the first TA based on content shown in FIG. 6. A specific manner of determining the first TA is not limited in embodiments of this application.

The first identifier may be any information that can indicate the association relationship between the first communication unit and the first TA. The first identifier may be an identifier of the first communication unit, or may be an identifier of a feature related to the first communication unit.

Optionally, when the first communication unit is the first cell, "the first identifier indicates the association relationship between the first communication unit and the first TA" may also be expressed as follows: The first identifier indicates the first cell, or the first identifier indicates a satellite corresponding to the first cell.

Optionally, when the first communication unit is the first carrier, "the first identifier indicates the association relationship between the first communication unit and the first TA" may also be expressed as follows: The first identifier indicates the first carrier, or the first identifier indicates a satellite corresponding to the first carrier.

Optionally, when the first communication unit is the first TRP, "the first identifier indicates the association relationship between the first communication unit and the first TA" may also be expressed as follows: The first identifier indicates the first TRP, or the first identifier indicates a satellite corresponding to the first TRP.

Optionally, when the first communication unit is the first satellite, "the first identifier indicates the association relationship between the first communication unit and the first TA" may also be expressed as follows: The first identifier indicates the first satellite, or the first identifier indicates a base station corresponding to the first satellite.

Optionally, when the first communication unit is the first base station, "the first identifier indicates the association relationship between the first communication unit and the first TA" may also be expressed as follows: The first identifier indicates the first base station, or the first identifier indicates a satellite corresponding to the first base station.

The following provides several examples of the first identifier.

Example 1: The first identifier is an identifier of a TA group (timing advance group, TAG).

In an NTN, signals between a terminal and a plurality of cells follow a same transmission path, such as passing through a same gateway (for example, gateway station) and a same satellite. Therefore, a difference between TAs of these cells is negligible. A base station may configure one TAG for the plurality of cells, and the cells corresponding to the TAG use a same TA. For a plurality of cells corresponding to one TAG, the terminal may report one TA, to reduce resource overheads for TA reporting.

As described above, the TAG and the first TA may be carried in a MAC CE. FIG. 14 is a diagram of a MAC CE according to an embodiment of this application. The MAC CE includes a plurality of Octs. Each Oct includes 8 bits (bits). First two bits RR of an Oct 1 are two reserved bits, and may be used to carry the identifier of the TAG. The other 6 bits of the Oct 1 and 8 bits of an Oct 2 may be used to carry the first TA.

For example, the base station configures the following three TAGs for the terminal: a TAG 1, a TAG 2, and a TAG 3. Current serving cells of the terminal include a cell 1 (an example of the first cell) and a cell 2. The two cells belong to the TAG 1 (a correspondence between cells and TAGs may be configured by the base station). When the bits RR are "01", the TAG 1 is indicated. When the bits RR are "10", the TAG 2 is indicated. When the bits RR are "11", the TAG 3 is indicated. If the bits RR in the MAC CE received by the base station is 01, the base station may determine that the first TA is a TA corresponding to the cell 1 and the cell 2.

Optionally, an Oct, for example, an Oct 3, may be further added to the MAC CE to indicate more TAGs.

Optionally, a new MAC CE may be further defined. The MAC CE carries the TAG and a TA corresponding to the TAG.

Example 2: The first identifier is an identifier or index of the first communication unit.

For example, the first communication unit is the first cell. An identifier of the first cell may be a long identifier, such as a PCI, a CGI, or a serving cell index. An index of the first cell may be a short identifier, such as some information in the PCI, the CGI, or the serving cell index. The terminal may report the long identifier or the short identifier. The identifier or index of the first cell may be carried in the MAC CE shown in FIG. 14.

Optionally, when the first identifier is the long identifier, the long identifier may be carried in the Oct 3. When the first identifier is the short identifier, the short identifier may be carried in RR, or the short identifier may be carried in the Oct 3.

Optionally, a new MAC CE may be further defined. The MAC CE carries the identifier or index of the first cell and a TA corresponding to the identifier or index of the first cell.

For example, current serving cells of the terminal include a cell 1 and a cell 2, and TAs of the two cells are different. If the first TA is the TA of the cell 1, the terminal may carry a PCI 1 in the Oct 3 to indicate the cell 1. If the first TA is the TA of the cell 2, the terminal may carry a PCI 2 in the Oct 3 to indicate the cell 2.

For another example, current serving cells of the terminal include a cell 1 and a cell 2, and TAs of the two cells are different. If the first TA is the TA of the cell 1, the terminal may carry some information in the PCI 1, such as a bit value "1", in RR to indicate the cell 1. If the first TA is the TA of the cell 2, the terminal may carry some information in the PCI 2, such as a bit value "0", in RR to indicate the cell 2.

For another example, current serving cells of the terminal include a cell 1 and a cell 2, and TAs of the two cells are different. The base station configures a short identifier 1 corresponding to the cell 1 and a short identifier 2 corresponding to the cell 2 for the terminal. If the first TA is the TA of the cell 1, the terminal may carry the short identifier 1, such as a bit value "1", in the MAC CE (for example, RR) to indicate the cell 1. If the first TA is the TA of the cell 2, the terminal may carry the short identifier 2, such as a bit value "0", in the MAC CE (for example, RR) to indicate the cell 2.

When the first communication unit is the first carrier, the first identifier is an identifier or index of the first carrier. The identifier of the first carrier may be a long identifier. The index of the first carrier may be a short identifier. The identifier or index of the first carrier may be carried in the MAC CE shown in FIG. 14, or may be carried in a new MAC CE. For a manner in which the MAC CE carries the identifier or index of the first carrier, refer to a manner in which the MAC CE carries the identifier or index of the first cell.

When the first communication unit is the first TRP, the first identifier is an identifier or index of the first TRP. The identifier of the first TRP may be a long identifier. The index of the first TRP may be a short identifier. The identifier or index of the first TRP may be carried in the MAC CE shown in FIG. 14, or may be carried in a new MAC CE. For a manner in which the MAC CE carries the identifier or index of the first TRP, refer to a manner in which the MAC CE carries the identifier or index of the first cell.

When the first communication unit is the first base station, the first identifier is an identifier or index of the first base station. The identifier of the first base station may be a long identifier. The index of the first base station may be a short identifier. The identifier or index of the first base station may be carried in the MAC CE shown in FIG. 14, or may be carried in a new MAC CE. For a manner in which the MAC CE carries the identifier or index of the first base station, refer to a manner in which the MAC CE carries the identifier or index of the first cell.

When the first communication unit is another type of communication unit, for a feature of the first identifier, refer to a feature of the identifier or index of the first cell. Details are not described again.

Example 3: The first identifier is an identifier or index of a first aircraft. The first communication unit is a communication unit of the first aircraft.

The identifier of the first aircraft may be a long identifier, such as a MAC address of the first aircraft. The index of the first aircraft may be a short identifier, such as some information in the MAC address of the first aircraft. The terminal may report the long identifier or the short identifier. The first aircraft may be a satellite, an uncrewed aerial vehicle, or another aircraft. The identifier or index of the first aircraft may be carried in the MAC CE shown in FIG. 14.

Optionally, when the first identifier is the long identifier, the long identifier may be carried in the Oct 3. When the first identifier is the short identifier, the short identifier may be carried in RR, or the short identifier may be carried in the Oct 3.

Optionally, a new MAC CE may be further defined. The MAC CE carries the identifier or index of the first aircraft and a TA corresponding to the identifier or index of the first aircraft.

For example, current serving cells of the terminal include a cell 1 and a cell 2, TAs of the two cells are different, and MAC addresses of the two cells are different. If the first TA is the TA of the cell 1, the terminal may carry a MAC address 1 in the Oct 3 to indicate the cell 1. If the first TA is the TA of the cell 2, the terminal may carry a MAC address 2 in the Oct 3 to indicate the cell 2.

For another example, current serving cells of the terminal include a cell 1 and a cell 2, TAs of the two cells are different, and MAC addresses of the two cells are different. If the first TA is the TA of the cell 1, the terminal may carry some information in the MAC address 1, such as a bit value "1", in RR to indicate the cell 1. If the first TA is the TA of the cell 2, the terminal may carry some information in the MAC address 2, such as a bit value "0", in RR to indicate the cell 2.

For another example, current serving cells of the terminal include a cell 1 and a cell 2, and TAs of the two cells are different. The base station configures a short identifier 1 corresponding to the cell 1 and a short identifier 2 corresponding to the cell 2 for the terminal. If the first TA is the TA of the cell 1, the terminal may carry the short identifier 1, such as a bit value "1", in the MAC CE (for example, RR) to indicate the cell 1. If the first TA is the TA of the cell 2, the terminal may carry the short identifier 2, such as a bit value "0", in the MAC CE (for example, RR) to indicate the cell 2.

Example 4: The first identifier is an identifier or index of a first logical channel. The first logical channel has an association relationship with the first communication unit; and/or the first logical channel has an association relationship with a first aircraft, and the first communication unit is a communication unit of the first aircraft.

The identifier of the first logical channel may be a long identifier, such as a logical channel identifier (logical channel identifier, LCID). The index of the first logical channel may be a short identifier, such as some information in the LCID. The terminal may report the long identifier or the short identifier. The first aircraft may be a satellite, an uncrewed aerial vehicle, or another aircraft.

"The first logical channel has the association relationship with the first communication unit" may also be expressed as follows: The first logical channel is a logical channel of the first communication unit or a logical channel corresponding to the first communication unit. "The first logical channel has the association relationship with the first aircraft" may also be expressed as follows: The first logical channel is a logical channel of the first aircraft or a logical channel corresponding to the first aircraft.

The identifier or index of the first logical channel may be carried in the MAC CE shown in FIG. 14.

Optionally, when the first identifier is the long identifier, the long identifier may be carried in the Oct 3. When the first identifier is the short identifier, the short identifier may be carried in RR, or the short identifier may be carried in the Oct 3.

Optionally, a new MAC CE may be further defined. The MAC CE carries the identifier or index of the first logical channel and a TA corresponding to the identifier or index of the first logical channel.

For example, current serving cells of the terminal include a cell 1 and a cell 2, TAs of the two cells are different, and logical channels of the two cells are different. If the first TA is the TA of the cell 1, the terminal may carry an LCID 1 in the Oct 3 to indicate the cell 1. If the first TA is the TA of the cell 2, the terminal may carry an LCID 2 in the Oct 3 to indicate the cell 2.

For another example, current serving cells of the terminal include a cell 1 and a cell 2, TAs of the two cells are different, and logical channels of the two cells are different. If the first TA is the TA of the cell 1, the terminal may carry some information in the LCID 1, such as a bit value "1", in RR to indicate the cell 1. If the first TA is the TA of the cell 2, the terminal may carry some information in the LCID 2, such as a bit value "0", in RR to indicate the cell 2.

For another example, current serving cells of the terminal include a cell 1 and a cell 2, and TAs of the two cells are different. The base station configures a short identifier 1 corresponding to the cell 1 and a short identifier 2 corresponding to the cell 2 for the terminal. If the first TA is the TA of the cell 1, the terminal may carry the short identifier 1, such as a bit value "1", in the MAC CE (for example, RR) to indicate the cell 1. If the first TA is the TA of the cell 2, the terminal may carry the short identifier 2, such as a bit value "0", in the MAC CE (for example, RR) to indicate the cell 2.

In Example 2 to Example 4 above, the short identifier is some information in the long identifier. Optionally, the short identifier may alternatively be information determined by the terminal based on the long identifier, and a correspondence between the short identifier and the long identifier may be specified in a protocol or configured by the base station. Alternatively, the short identifier is an identifier configured by the base station for the terminal, and the base station further configures a correspondence between the short identifier and the long identifier for the terminal.

For example, the base station may configure the long identifier for the terminal through an RRC message, and the terminal may determine the short identifier based on a correspondence. The correspondence may be specified in a protocol or configured by the base station. After receiving the short identifier, the base station may determine, based on the correspondence, the long identifier corresponding to the short identifier.

In Example 2 to Example 4 above, the long identifier or the short identifier reported by the terminal may be referred to as the first identifier, and the long identifier configured by the base station for the terminal may be referred to as a second identifier. The second identifier is usually unique. For example, one cell, one satellite, or one logical channel can be uniquely determined through the second identifier. However, a disadvantage of this identifier is that it is long, that is, occupies a large quantity of bits. The terminal indicates an association relationship between the first cell and the first TA through one short identifier, so that resource overheads for TA reporting can be reduced.

Optionally, before determining the first information, the terminal may trigger reporting of a plurality of TAs. The terminal may use a latest TA for packet assembly to generate the first information. For example, after Case 2 above is triggered, the terminal generates a second TA. If Case 3 is triggered before the second TA is used for packet assembly, the terminal generates the first TA. Then, the terminal may determine to use the first TA for packet assembly to generate the first information. Because the first TA is the latest TA, using the first TA for packet assembly to generate the first information can more accurately reflect a transmission delay between the terminal and the base station.

After generating the first information, the terminal may perform S1220.

S1220: Send the first information.

Correspondingly, the base station receives the first information, and performs S1230.

S1230: Determine the association relationship between the first communication unit and the first TA based on the first identifier.

"Determine the association relationship between the first communication unit and the first TA based on the first identifier" may also be expressed as follows: Determine, based on the first identifier, that the first TA corresponds to the first communication unit, or determine, based on the first identifier, that a communication unit corresponding to the first TA is the first communication unit.

For example, the first communication unit is the first cell. The first identifier may be any information indicating the association relationship between the first cell and the first TA. When sending the first TA, the terminal sends the first TA and the first identifier together. After receiving the first information, the base station parses the first information to obtain the first TA and the first identifier, and may determine, based on the first identifier, the first cell corresponding to the first TA, so that correspondences between TAs and cells in a multi-connectivity scenario in an NTN can be distinguished.

Optionally, the method 1200 further includes: The terminal receives third information. The third information includes a TA offset and the first identifier.

Correspondingly, the base station sends the third information. Optionally, the TA offset is determined by the base station based on the first TA.

To cope with a long transmission delay in an NTN, in comparison with a terrestrial network, a parameter K_{offset} is introduced into the NTN as a scheduling offset of the NTN. K_{offset} usually needs to be greater than or equal to a sum of T1 and T2. For meanings of T1 and T2, refer to related descriptions in FIG. 6 above.

In FIG. 6, a link between a terminal and a satellite is referred to as a service link. A round trip time (round trip time, RTT) between the satellite and the terminal is denoted as T1. A link between the satellite and a ground gateway is referred to as a feeder link. The feeder link is divided into two parts by an uplink time synchronization reference point: a round trip time Common TA (denoted as T2) between the satellite and the uplink time synchronization reference point, and a round trip time K_{mac} (denoted as T3) between the uplink time synchronization reference point and the ground gateway. The round trip time between the uplink time synchronization reference point and the ground gateway is usually controlled or compensated by the base station. In a transparent forwarding satellite architecture, the satellite does not have base station functions, and the terminal needs to calculate T2. In a regenerative satellite architecture, the satellite performs some or all of the base station functions, and T2 and T3 are 0, so that the terminal device does not need to calculate T2.

In an implementation method, the terminal calculates a TA based on the following formula:$TA = T 1 + T 2 + {N}_{TA } + {N}_{TAoffset}$

N_{TA} is determined based on an absolute value parameter (also referred to as a TA absolute value or a TA absolute value parameter) or an adjustment value parameter (also referred to as a TA adjustment value or a TA adjustment value parameter). The absolute value parameter or the adjustment value parameter of N_{TA} comes from the base station or is a default value. N_{TAoffset} represents a constant value related to an operating frequency band. N_{TAoffset} may be obtained based on a system message from the base station, for example, configured through a timing advance offset information element (also referred to as an n-timing advance offset) in the system message, or may be set to a default value.

K_{offset} may be used to adjust a transmission time of a physical random access channel (physical random access channel, PRACH) triggered by a PDCCH, a transmission time of a physical uplink shared channel (physical uplink shared channel, PUSCH) scheduled by a random access response (random access response, RAR) or a fallback random access response (fallback random access response, fallbackRAR), a transmission time of a hybrid automatic repeat requestacknowledgment (hybrid automatic repeat request ack, HARQ-ACK) on a PUSCH, a transmission time of a PUSCH triggered by a PDCCH, or the like.

For ease of description, the following uses an example in which K_{offset} is used to adjust a transmission time of a PUSCH triggered by a PDCCH for description.

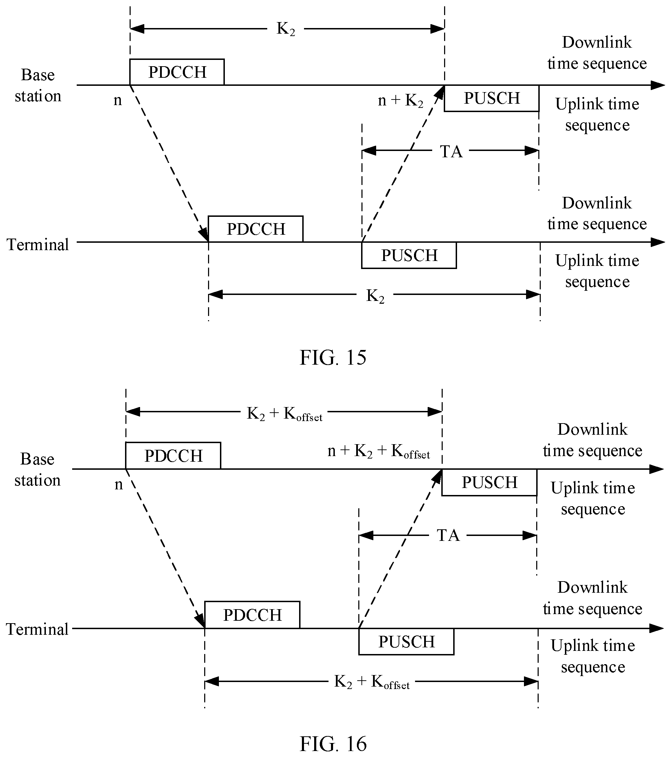

FIG. 15 is a diagram of PUSCH transmission in a terrestrial network according to an embodiment of this application. The base station sends a PDCCH in a slot n. DCI in the PDCCH schedules a transmission time of a PUSCH. For example, the DCI indicates a slot offset K₂, indicating that the base station expects to receive the PUSCH from the terminal at a time point n + K₂. After obtaining K₂, the terminal calculates, based on the TA and K₂, a time for sending the PUSCH, and then sends the PUSCH to the base station. K₂ > TA + T_{proc,2}. T_{proc,2} is preparation duration of the PUSCH, indicating a delay in processing the received PDCCH and generating the PUSCH by the terminal.

In the NTN, considering a long transmission delay between the terminal and the base station, a time at which the base station expects to receive the PUSCH and indicates to the terminal is n + K₂ + K_{offset}. FIG. 16 is an example diagram of PUSCH transmission in an NTN according to an embodiment of this application. The base station sends a PDCCH in a slot n. DCI in the PDCCH schedules a transmission time of a PUSCH. For example, the DCI indicates a slot offset K₂, indicating that the base station expects to receive the PUSCH from the terminal at a time point n + K₂ + K_{offset}. After obtaining K₂, the terminal calculates, based on the TA, K_{offset}, and K₂, a time for sending the PUSCH, and then sends the PUSCH to the base station. K₂ + K_{offset} > TA + T_{proc,2}. T_{proc,2} is preparation duration of the PUSCH, specifically indicating a delay in processing the received PDCCH and generating the PUSCH by the terminal.

K_{offset} introduced into the foregoing NTN scenario may be classified into cell-level K_{offset} (denoted as K_{celloffset}) and terminal-level K_{offset} (denoted as K_{ueoffset}). Optionally, K_{celloffset} is delivered to the terminal device in a system message. Before initial access, the terminal has only K_{celloffset}. In this case, K_{offset} = K_{celloffset} in FIG. 16. After initial access, the terminal reports an estimated TA of the terminal device to the base station through a TA reporting (Timing Advance Reporting, TAR) procedure. The base station calculates terminal-level differential K_{offset} based on the estimated TA to obtain K_{ueoffset}, and sends K_{ueoffset} (an example of the foregoing TA offset) to the terminal through a differential K_{offset} MAC CE. The terminal determines K_{offset} based on K_{ueoffset}. For example, K_{offset} = K_{celloffset} - K_{ueoffset}. In this case, K_{offset} calculated by the terminal based on K_{celloffset} - K_{ueoffset} is K_{offset} in FIG. 16.

The foregoing describes an embodiment in which the terminal sends the first TA. In some cases, the terminal may alternatively choose not to send the first TA.

Optionally, the method 1200 further includes:
If a second condition is satisfied, the terminal determines not to send the first information. The second condition includes one or more of the following conditions: Fourth information is received, where the fourth information indicates to deactivate the first communication unit, or the fourth information indicates to hand over to a second communication unit; or a deactivation timer of the first communication unit expires.

If one or more cases in the second condition occur, reporting the first TA is meaningless. The terminal may cancel reporting of the first TA when the second condition is satisfied, to save resources.

For example, the first communication unit is the first cell, and the first cell is an activated SCell. The fourth information is SCell deactivation signaling, for example, an SCell deactivation MAC CE. When receiving the fourth information, the terminal cancels reporting of the TA of the first cell or cancels triggered reporting of the TA of the first cell, that is, determines not to send the first information.

For another example, the first communication unit is the first cell, and the first cell is an activated SCell. A secondary cell deactivation timer sCellDeactivationTimer is started when the first cell is activated. If sCellDeactivationTimer expires, the terminal cancels reporting of the TA of the first cell or cancels triggered reporting of the TA of the first cell, that is, determines not to send the first information.

The foregoing describes in detail method examples provided in embodiments of this application. It may be understood that to implement the foregoing functions, a corresponding apparatus includes a corresponding hardware structure and/or software module for performing each of the functions. A person skilled in the art should be easily aware that in combination with units and algorithm steps in the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

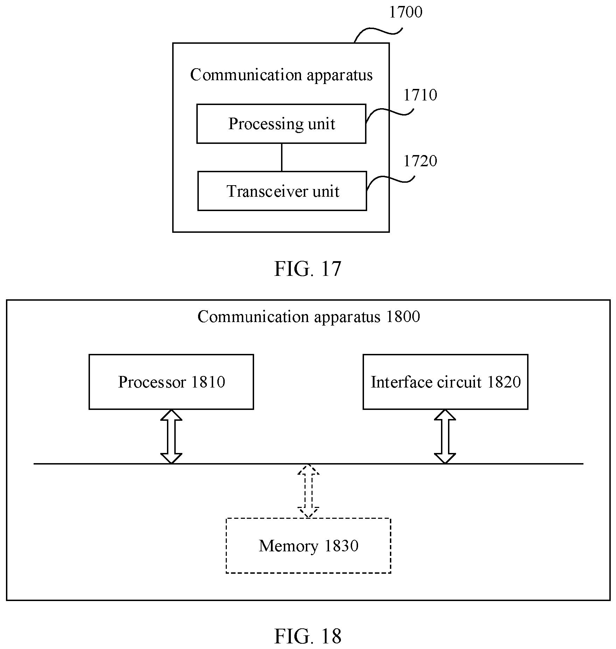

FIG. 17 and FIG. 18 are diagrams of structures of two communication apparatuses according to embodiments of this application. These apparatuses may be configured to implement functions of the terminal or the base station in the foregoing method embodiments, and therefore also have beneficial effects of the foregoing method embodiments. In embodiments of this application, these apparatuses may be the terminal shown in FIG. 1, the base station shown in FIG. 1, or a module (for example, a chip) used in the terminal or the base station.

As shown in FIG. 17, an apparatus 1700 includes a processing unit 1710 and a transceiver unit 1720. The transceiver unit 1720 performs a receiving step and/or a sending step under control of the processing unit 1710. The transceiver unit 1720 is a sending unit when performing the sending step. The transceiver unit 1720 is a receiving unit when performing the receiving step. The apparatus 1700 is configured to implement functions of the terminal or the base station in the method embodiment shown in FIG. 12.

When the apparatus 1700 is configured to implement the functions of the terminal in the method embodiment shown in FIG. 12, the processing unit 1710 is configured to determine first information, where the first information includes a first TA and a first identifier, and the first identifier indicates an association relationship between a first communication unit and the first TA; and the transceiver unit 1720 is configured to send the first information.

Optionally, the processing unit 1710 is further configured to: if a first condition is satisfied, send the first information through the transceiver unit 1720. The first condition includes: The processing unit 1710 receives second information. The second information indicates to activate the first communication unit, or the second information indicates to hand over to the first communication unit.

Optionally, the transceiver unit 1720 is further configured to receive third information. The third information includes a TA offset and the first identifier.

Optionally, the processing unit 1710 is further configured to: if a second condition is satisfied, determine not to send the first information. The second condition includes one or more of the following conditions: The processing unit 1710 receives fourth information, where the fourth information indicates to deactivate the first communication unit, or the fourth information indicates to hand over to a second communication unit; or a deactivation timer of the first communication unit expires.

Optionally, before determining the first information, the transceiver unit 1720 is further configured to receive a second identifier. The second identifier has an association relationship with the first communication unit. The second identifier is longer than the first identifier.

When the apparatus 1700 is configured to implement the functions of the base station in the method embodiment shown in FIG. 12, the transceiver unit 1720 is configured to receive first information, where the first information includes a first TA and a first identifier, and the first identifier indicates an association relationship between a first communication unit and the first TA; and the processing unit 1710 is configured to determine the association relationship between the first communication unit and the first TA based on the first identifier.

Optionally, before receiving the first information, the transceiver unit 1720 is further configured to send second information. The second information indicates to activate the first communication unit, or the second information indicates to hand over to the first communication unit.

Optionally, the transceiver unit 1720 is further configured to send third information. The third information includes a TA offset and the first identifier.

Optionally, before receiving the first information, the transceiver unit 1720 is further configured to send a second identifier. The second identifier has an association relationship with the first communication unit. The second identifier is longer than the first identifier.

The apparatus 1700 may be a terminal or a base station. The processing unit 1710 may be implemented by hardware or software. When being implemented by hardware, the processing unit 1710 may be a logic circuit, an integrated circuit, or the like. When the processing unit 1710 is implemented by software, the processing unit 1710 may be a general-purpose processor, and is implemented by reading software code stored in a storage unit. The storage unit may be integrated into the processing unit 1710, or may be located outside the processing unit 1710 and exist independently.

As shown in FIG. 18, an apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the apparatus 1800 may further include a memory 1830, configured to store instructions executed by the processor 1810, store input data needed by the processor 1810 to run the instructions, or store data generated after the processor 1810 runs the instructions.

When the apparatus 1800 is configured to implement the method shown in FIG. 12, the processor 1810 is configured to implement a function of the foregoing processing unit 1810, and the interface circuit 1820 is configured to implement a function of the foregoing transceiver unit 1820.

When the apparatus 1800 is a terminal chip (namely, a chip used in a terminal), the terminal chip implements functions of the terminal in the foregoing method embodiments. That the terminal chip receives information from a base station may be understood as that the information is first received by another module (for example, a radio frequency module or an antenna) in the terminal, and then sent by the module to the terminal chip. That the terminal chip sends information to a base station may be understood as that the information is first sent to another module (for example, a radio frequency module or an antenna) in the terminal, and then sent to the base station by the module.

When the apparatus 1800 is a base station chip (namely, a chip used in a base station), the base station chip implements functions of the base station in the foregoing method embodiments. That the base station chip receives information from a terminal may be understood as that the information is first received by another module (for example, a radio frequency module or an antenna) in the base station, and then sent by the module to the base station chip. That the base station chip sends information to a terminal may be understood as that the information is first sent to another module (for example, a radio frequency module or an antenna) in the base station, and then sent to the terminal by the module.

In this application, that an entity A sends information to an entity B may be that A directly sends the information to B, or may be that A indirectly sends the information to B via another entity. Similarly, that the entity B receives information from the entity A may be that the entity B directly receives information sent by the entity A, or may be that the entity B indirectly receives information sent by the entity A via another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

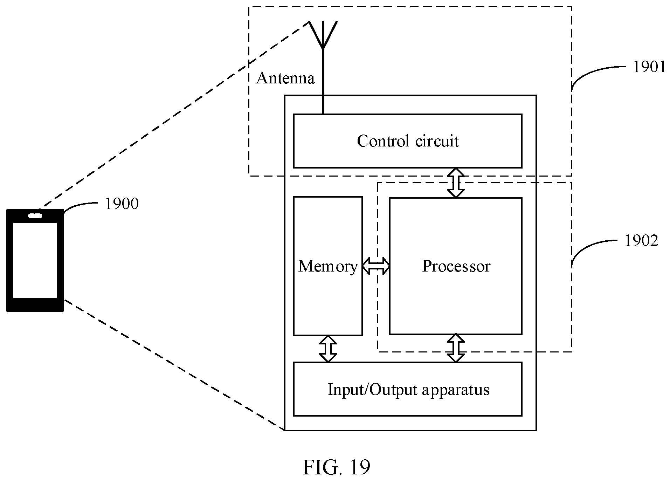

FIG. 19 is a diagram of a structure of a terminal according to an embodiment of this application. For ease of description, FIG. 19 shows only main components of a terminal 1900. The terminal 1900 may be used in the system shown in FIG. 1, to implement functions of the terminal in the foregoing method embodiments. As shown in the figure, the terminal 1900 includes a processor, a memory, a control circuit, an antenna, and an input/output apparatus. The processor is mainly configured to: process a communication protocol and communication data, control the entire terminal, execute a software program, and process data of the software program, for example, is configured to support the terminal in performing the action described in the foregoing method embodiments. The memory is mainly configured to store the software program and data. The control circuit is mainly configured to: perform conversion between a digital signal and a radio frequency signal, and process the radio frequency signal. The control circuit and the antenna together may also be referred to as a transceiver, and are mainly configured to receive and send a radio frequency signal in a form of an electromagnetic wave. The input/output apparatus is, for example, a touchscreen, a display, or a keyboard, and is mainly configured to: receive data input by a user and output data to the user.

After the terminal is powered on, the processor may read the software program in the memory, interpret and execute instructions of the software program, and process the data of the software program. When the data needs to be sent wirelessly, the processor processes the to-be-sent data, and then outputs a digital signal to a radio frequency circuit. The radio frequency circuit performs radio frequency processing on the digital signal, and then sends a radio frequency signal in a form of an electromagnetic wave through the antenna. When data is sent to the terminal, the radio frequency circuit receives a radio frequency signal through the antenna, converts the radio frequency signal into a digital signal, and outputs the digital signal to the processor. The processor converts the digital signal into the data, and processes the data.

A person skilled in the art may understand that for ease of description, FIG. 19 shows only one memory and one processor. In an actual terminal, there may be a plurality of processors and a plurality of memories. The memory may also be referred to as a storage medium, a storage device, or the like. This is not limited in this application.

In an optional implementation, the processor may include a baseband processor and/or a central processing unit. The baseband processor is mainly configured to process the communication protocol and the communication data. The central processing unit is mainly configured to control the entire terminal, execute the software program, and process the data of the software program. Functions of the baseband processor and the central processing unit may be integrated into the processor in FIG. 19. A person skilled in the art may understand that the baseband processor and the central processing unit may alternatively be processors independent of each other, and are interconnected by using a technology such as a bus. A person skilled in the art may understand that the terminal may include a plurality of baseband processors to adapt to different network standards, the terminal may include a plurality of central processing units to enhance a processing capability of the terminal, and components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

In this embodiment of this application, the antenna and the control circuit that have receiving and sending functions may be considered as a transceiver unit 1901 of the terminal 1900, for example, configured to support the terminal in implementing the receiving function and the sending function in the method embodiments. The processor having a processing function is considered as a processor 1902 of the terminal 1900. The terminal 1900 includes the transceiver unit 1901 and the processor 1902. The transceiver unit 1901 may also be referred to as a transceiver, a transceiver machine, a transceiver apparatus, or the like. For example, a component configured to implement the receiving function in the transceiver unit 1901 may be considered as a receiving unit, and a component configured to implement the sending function in the transceiver unit 1901 may be considered as a sending unit. In other words, the transceiver unit 1901 includes the receiving unit and the sending unit. The receiving unit may also be referred to as a receiver, an input port, a receiving circuit, or the like. The sending unit may be referred to as a transmitting machine, a transmitter, a transmitting circuit, or the like. For example, the transceiver unit 1901 may not include an antenna, but includes only a circuit part, and the antenna is disposed outside the transceiver unit.

The processor 1902 may be configured to execute instructions stored in the memory, to control the transceiver unit 1901 to receive a signal and/or send a signal, to complete the functions of the terminal in the foregoing method embodiments. In an implementation, it may be considered that a function of the transceiver unit 1901 is implemented by using a transceiver circuit or a transceiver-dedicated chip. When receiving and sending various types of signals, the processor 1902 controls the transceiver unit 1901 to implement the receiving. Therefore, the processor 1902 is a decider of the signal sending and receiving, and initiates data sending and receiving operations. The transceiver unit 1901 is a performer of the signal sending and receiving.

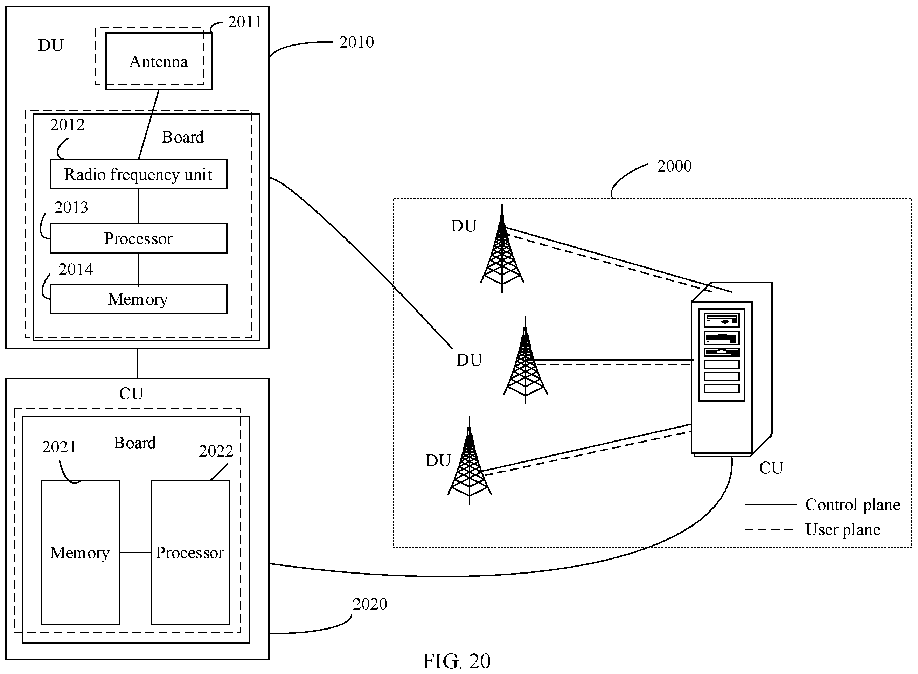

FIG. 20 is a diagram of a structure of a base station according to an embodiment of this application. For ease of description, FIG. 20 shows only main components of a base station 2000. The base station 2000 may be used in the system shown in FIG. 1, to implement functions of the base station in the foregoing method embodiments. As shown in FIG. 20, the base station 2000 may include one or more DUs 2010 and one or more CUs 2020. The DU 2010 may include at least one antenna 2011, at least one radio frequency unit 2012, at least one processor 2013, and at least one memory 2014. The CU 2020 may communicate with a core network. The CU 2020 may include at least one processor 2022 and at least one memory 2021.

The DU 2010 is mainly configured to: receive and send radio frequency signals, perform conversion between the radio frequency signal and a baseband signal, and complete a part of baseband processing functions. The CU 2020 may include the at least one processor 2022 and the at least one memory 2021. The CU 2020 and the DU 2010 may communicate with each other through an interface. A control plane (control plane, CP) interface may be Fs-C, for example, F1-C. A user plane (user plane, UP) interface may be Fs-U, for example, F1-U.

The CU 2020 is a control center of the base station 2000, may also be referred to as a processing unit, and is mainly configured to complete baseband processing functions, such as channel coding, multiplexing, modulation, and spread spectrum. For example, the CU 2020 may be configured to control the base station 2000 to perform an operation procedure related to the base station in the foregoing method embodiments. The DU 2010 and the CU 2020 may be physically disposed together, or may be physically separate, namely, a distributed base station.

Baseband processing functions of the DU 2010 and the CU 2020 may be divided based on protocol layers of a wireless network. For example, functions of a PDCP layer and a protocol layer above the PDCP layer are set on the CU 2020, and a function of a protocol layer below the PDCP layer is set on the DU 2010.

In an optional embodiment, the DU 2010 may include one or more boards. A plurality of boards may jointly support a radio access network (for example, an NR network) of a single access standard, or may respectively support radio access networks of different access standards. The memory 2014 is configured to store necessary instructions and data. The processor 2013 is configured to control the base station 2000 to perform a necessary action. The memory 2014 and the processor 2013 may serve the one or more boards. In other words, a memory and a processor may be independently disposed on each board. Alternatively, a shared memory and processor may be disposed for the plurality of boards. In addition, a necessary circuit may be further disposed on each board.

In an optional embodiment, the CU 2020 may include one or more boards. A plurality of boards may jointly support a radio access network (for example, an NR network) of a single access standard, or may respectively support radio access networks of different access standards. The memory 2021 is configured to store necessary instructions and data. The processor 2022 is configured to control the base station 2000 to perform a necessary action, for example, is configured to control the base station 2000 to perform the operation procedure related to the base station in the foregoing method embodiments. The memory 2021 and the processor 2022 may serve the one or more boards. In other words, a memory and a processor may be independently disposed on each board. Alternatively, a shared memory and processor may be disposed for the plurality of boards. In addition, a necessary circuit may be further disposed on each board.

It should be understood that the base station 2000 shown in FIG. 20 can implement each process related to the base station in the method embodiments. Operations and/or functions of the modules in the base station 2000 are respectively intended to implement corresponding procedures in the foregoing method embodiments. For details, refer to the descriptions in the foregoing method embodiments. Details are not described herein again.

It should be understood that the base station 2000 shown in FIG. 20 is merely a possible architecture of the base station, and does not constitute any limitation on this application. The method provided in this application is applicable to a base station with another architecture, for example, a base station including a CU, a DU, and an AAU, or a base station including a BBU and an RRU. A specific architecture of the base station is not limited in this application.

It may be understood that the processor in embodiments of this application may be a CPU, or may be another general-purpose processor, a digital signal processor (digital signal processor, DSP), an ASIC, an FPGA or another programmable logic device, a transistor logic device, a hardware component, or any combination thereof. The general-purpose processor may be a microprocessor, any regular processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. The processor and the storage medium may alternatively exist as discrete components in a base station or a terminal.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

Finally, regarding embodiments of this application, the following points should be further noted:
First, in embodiments of this application, first, second, and various numbers are merely intended for distinguishing for ease of description, rather than to limit the scope of embodiments of this application. For example, a first primary cell and a second primary cell represent two primary cells, and the two primary cells may be two different cells, or may be a same cell.
Second, in embodiments of this application, "indication" may include a direct indication and an indirect indication, or may include an explicit indication and an implicit indication. Information indicated by a piece of information is referred to as to-be-indicated information. In a specific implementation process, the to-be-indicated information may be indicated in a plurality of manners. For example, the to-be-indicated information may be directly indicated, for example, by using the to-be-indicated information, an index of the to-be-indicated information, or the like. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, the to-be-indicated information may be indicated by pre-agreeing (for example, specifying in a protocol) whether an information element exists, to reduce indication overheads to some extent.
Third, a "protocol" in embodiments of this application may be a standard protocol in the communication field, for example, may include a long term evolution (long term evolution, LTE) protocol, an NR protocol, and a related protocol in a future communication system. This is not limited in this application.
Fourth, "predefinition" or "preconfiguration" may be implemented by pre-storing corresponding code or a corresponding table in a device (for example, a terminal or a base station), or may be implemented in another manner of indicating related information. A specific implementation is not limited in this application. "Storing" may be storage in one or more memories. The one or more memories may be separately disposed, or may be integrated into a processor or a communication apparatus. Alternatively, a part of the one or more memories may be separately disposed, and a part of the one or more memories may be integrated into a processor or a communication apparatus. A type of the memory may be a storage medium in any form. This is not limited in this application.
Fifth, "at least one" means one or more, and "a plurality of" means two or more. The term "and/or" describes an association relationship between associated objects and represents that three relationships may exist. For example, A and/or B may represent the following three cases: Only A exists, only B exists, and both A and B exist. A and B each may be a single object or a plurality of objects. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. a, b, and c each may be a single object or a plurality of objects.
Sixth, in embodiments of this application, descriptions such as "when", "in a case of", "if", and "assuming that" all mean that a device (for example, a terminal or a base station) performs corresponding processing in an objective case, but are not intended to limit time, do not require the device to necessarily have a determining action during implementation, and do not mean any other limitation.
Seventh, in embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A communication method, wherein the method comprises:
determining first information, wherein the first information comprises a first timing advance TA and a first identifier, and the first identifier indicates an association relationship between a first communication unit and the first TA; and
sending the first information.

2. The method according to claim 1, wherein sending the first information comprises:
if a first condition is satisfied, sending the first information, wherein the first condition comprises: second information is received, wherein the second information indicates to activate the first communication unit, or the second information indicates to hand over to the first communication unit.

3. The method according to claim 2, wherein the second information indicates to activate the first communication unit, and the second information comprises:
secondary cell activation information, enhanced secondary cell activation information, or secondary cell state information.

4. The method according to any one of claims 1 to 3, wherein the method further comprises:
receiving third information, wherein the third information comprises a TA offset and the first identifier.

5. The method according to claim 2 or 3, wherein the method further comprises:
if a second condition is satisfied, determining not to send the first information, wherein the second condition comprises one or more of the following conditions:
fourth information is received, wherein the fourth information indicates to deactivate the first communication unit, or the fourth information indicates to hand over to a second communication unit; or
a deactivation timer of the first communication unit expires.

6. The method according to any one of claims 1 to 5, wherein before determining the first information, the method further comprises:
receiving a second identifier, wherein the second identifier has an association relationship with the first communication unit.

7. A communication method, wherein the method comprises:
receiving first information, wherein the first information comprises a first timing advance TA and a first identifier, and the first identifier indicates an association relationship between a first communication unit and the first TA; and
determining the association relationship between the first communication unit and the first TA based on the first identifier.

8. The method according to claim 7, wherein before receiving the first information, the method further comprises:
sending second information, wherein the second information indicates to activate the first communication unit, or the second information indicates to hand over to the first communication unit.

9. The method according to claim 8, wherein the second information indicates to activate the first communication unit, and the second information comprises:
secondary cell activation information, enhanced secondary cell activation information, or secondary cell state information.

10. The method according to any one of claims 7 to 9, wherein the method further comprises:
sending third information, wherein the third information comprises a TA offset and the first identifier.

11. The method according to any one of claims 7 to 10, wherein before receiving the first information, the method further comprises:
sending a second identifier, wherein the second identifier has an association relationship with the first communication unit.

12. The method according to any one of claims 1 to 11, wherein the first identifier comprises an identifier of a first TA group, and a communication unit corresponding to the first TA group comprises the first communication unit.

13. The method according to claim 6 or 11, wherein the first identifier is an index of the first communication unit, and the second identifier is an identifier of the first communication unit.

14. The method according to claim 6 or 11, wherein the first identifier is an index of a first aircraft, the second identifier is an identifier of the first aircraft, and the first communication unit is a communication unit of the first aircraft.

15. The method according to claim 6 or 11, wherein the first identifier is an index of a first logical channel, and the second identifier is an identifier of the first logical channel; wherein
the first logical channel has an association relationship with the first communication unit; and/or
the first logical channel has an association relationship with a first aircraft, and the first communication unit is a communication unit of the first aircraft.

16. A communication apparatus, comprising:
a module configured to perform the method according to any one of claims 1 to 15.

17. A communication apparatus, comprising a processor and an interface circuit, wherein the interface circuit is configured to receive a signal from another communication apparatus and transmit the signal to the processor, or send a signal from the processor to another communication apparatus; and the processor is configured to implement the method according to any one of claims 1 to 15 by using a logic circuit or executing code instructions.

18. A computer-readable storage medium, wherein the computer-readable storage medium stores a computer program or instructions, and when the computer program or the instructions are executed by a communication apparatus, the method according to any one of claims 1 to 15 is implemented.
